# EUROPEAN PATENT SPECIFICATION

(11) **EP 4 226 988 B1**
(45) Date of publication and mention of the grant of the patent: **18.02.2026**
(21) Application number: 21877221.8
(22) Date of filing: 03.08.2021
(51) Int. Cl.: B01D 45/08, F24F 13/02, F24F 13/22, B01D 53/26, F24F 1/0087, F24F 3/14, F24F 1/0035, F24F 1/0003

(54) **AIR CONDITIONER**
KLIMAANLAGE
CLIMATISEUR

(30) Priority: 05.10.2020 JP 2020168616
(43) Date of publication of application: 16.08.2023
(73) Proprietor: Panasonic Intellectual Property Management Co., Ltd., Osaka-shi, Osaka 540-6207 (JP)
(72) Inventor: UEMATSU Shunichi, Osaka-shi, Osaka 540-6207 (JP); TOSHA Teruo, Osaka-shi, Osaka 540-6207 (JP); NAGOSHI Kenji, Osaka-shi, Osaka 540-6207 (JP)
(74) Representative: Eisenführ Speiser
(86) International application number: PCT/JP2021/028703
(87) International publication number: WO 2022/074917

(56) References cited:
- JP-A- 2001 041 512
- JP-A- 2001 099 452
- JP-A- 2001 099 452
- JP-A- 2003 262 427
- JP-A- 2003 314 858
- JP-A- 2004 060 511
- JP-A- H07 178 312
- JP-A- H07 178 312
- JP-A- H08 178 350
- JP-A- H08 178 350
- JP-B2- 4 337 402

## Description

### TECHNICAL FIELD

The present invention relates to an air conditioner.

### BACKGROUND ART

Conventionally, as described in Japanese Patent Publication No. 2001-91000 (PTL 1), there has been known an air conditioner including an indoor unit disposed inside a room to be air-conditioned, and an outdoor unit disposed outside the room. The air conditioner is configured to be able to supply humidified outdoor air from the outdoor unit to the indoor unit.

JP 2001 099452 A discloses a humidifying unit that is integrally formed with the outdoor unit of an air conditioner. The humidifying unit produces air for humidifying, which is introduced into a room through an air duct. The humidifying unit is provided with a rotor having an adsorbent. The humidifying unit allows the adsorbent to adsorb moisture contained in the outdoor air and subsequently to desorb the moisture therefrom for producing humidifying air. The produced humidifying air is introduced into the air duct substantially in a state of saturated air. By allowing the condensation of the saturated air in the air duct, the heating amount by a heater is reduced.

In JP 2001 041512 A, a humid air conveying passage for connecting a humidifying unit and an indoor unit is provided with a lowermost point which is located at a lower level than the humidifying unit and the indoor unit. The lowermost point is provided with a water collector. Water condensed in the passage is smoothly collected to the water collector at the lowermost point and the water thus collected to the water collector is discharged outside from an on-off valve. Accordingly, resistance of the passage against humid air is not brought into an instable condition by water, and hence humid air can be stably supplied to the outdoor unit. Further, as water is not abnormally collected to the passage, abnormal sound is not generated.

### SUMMARY OF THE INVENTION

However, in the case of the air conditioner described in PTL 1, when dew condensation occurs in a ventilation conduit that connects the outdoor unit and the indoor unit and allows the humidified outdoor air to flow, water generated by the dew condensation may be accumulated in the ventilation conduit. Further, the solution presented in JP2001-41512A requires the usage of moving parts e.g. in form of a float for opening and closing the water evacuation passage.

Therefore, an object of the present invention is to prevent accumulation of water in a ventilation conduit in an air conditioner that supplies humidified outdoor air from an outdoor unit to an indoor unit through the ventilation conduit. It is a further object to facilitate the design of water evacuation from the ventilation conduit.

The present invention aims to overcome at least some of the above disadvantages with an air conditioner as defined in claim 1. Preferred embodiments are defined in the dependent claims.

The air conditioner according to the present invention can prevent the accumulation of water in the ventilation conduit in the air conditioner that supplies the humidified outdoor air from the outdoor unit to the indoor unit through the ventilation conduit easily without moving parts.

### BRIEF DESCRIPTION OF THE DRAWINGS

Fig. 1 is a schematic configuration diagram of an air conditioner according to an exemplary embodiment of the present invention.
Fig. 2 is a perspective view illustrating an outer appearance of an outdoor unit according to the exemplary embodiment of the present invention.
Fig. 3 is a perspective view illustrating an internal configuration of a ventilation device according to the exemplary embodiment.
Fig. 4 is a perspective view of the ventilation device according to the exemplary embodiment from which some of its components are removed.
Fig. 5 is a top view of the ventilation device according to the exemplary embodiment from which some of its components are removed.
Fig. 6 is an exploded perspective view of the ventilation device according to the exemplary embodiment.
Fig. 7 is an exploded perspective view of some components of the ventilation device according to the exemplary embodiment as viewed from a different viewpoint.
Fig. 8 is a schematic sectional view of the ventilation device according to the exemplary embodiment.
Fig. 9 is a diagram illustrating a humidification operation (low-humidification operation) of the ventilation device according to the exemplary embodiment.
Fig. 10 is a diagram illustrating a humidification operation (high-humidification operation) of the ventilation device according to the exemplary embodiment.
Fig. 11 is a timing chart of the humidification operation of the ventilation device according to the exemplary embodiment.
Fig. 12 is a diagram illustrating a dehumidification operation and a regeneration operation of the ventilation device according to the exemplary embodiment.
Fig. 13 is a timing chart of the dehumidification operation and the regeneration operation of the ventilation device according to the exemplary embodiment.
Fig. 14 is a diagram illustrating a ventilation operation of the ventilation device according to the exemplary embodiment.
Fig. 15 is an exploded view of a portion of a ventilation conduit according to an embodiment of the present invention.
Fig. 16 is a sectional view of a portion of the ventilation conduit according to an embodiment of the present invention.

### DESCRIPTION OF EMBODIMENT

An air conditioner according to the present invention is an air conditioner including an indoor unit and an outdoor unit, the air conditioner including a ventilation conduit and a fan. The ventilation conduit connects an inside of the outdoor unit and an inside of the indoor unit. The fan draws outdoor air into the outdoor unit, and sends the drawn outdoor air toward the indoor unit through the ventilation conduit. In the air conditioner according to the present invention, the ventilation conduit includes a through hole in a lowermost part of the ventilation conduit.

The air conditioner according to the present invention can prevent the accumulation of water in the ventilation conduit in the air conditioner that supplies the humidified outdoor air from the outdoor unit to the indoor unit through the ventilation conduit.

In addition, in the air conditioner according to the present invention, the ventilation conduit includes a hood that extends from a side closer to the outdoor unit and covers the through hole.

Furthermore, for example, the air conditioner according to the present invention may include: an absorbent that absorbs moisture of the outdoor air; a flow channel that passes through the absorbent to connect with the ventilation conduit; and a heater that heats the outdoor air on an upstream side relative to the absorbent in the flow channel. The air conditioner according to the present invention may perform a humidification operation with the fan generating a flow of the outdoor air toward the indoor unit in the flow channel, the heater heating the outdoor air, and the heated outdoor air taking the moisture from the absorbent and flowing toward the indoor unit.

In addition, for example, in the air conditioner according to the present invention, the heater may be a positive temperature coefficient (PTC) heater.

Furthermore, for example, in the air conditioner according to the present invention, the absorbent may be a polymeric sorbent.

Moreover, for example, in the air conditioner according to the present invention, the flow channel may include a labyrinth that allows the outdoor air to pass.

### (Exemplary embodiment)

Hereinafter, one exemplary embodiment of the present invention will be described with reference to the drawings. Hereinafter, a Z-axis direction (vertical direction) in each drawing may be described as an upper/lower direction.

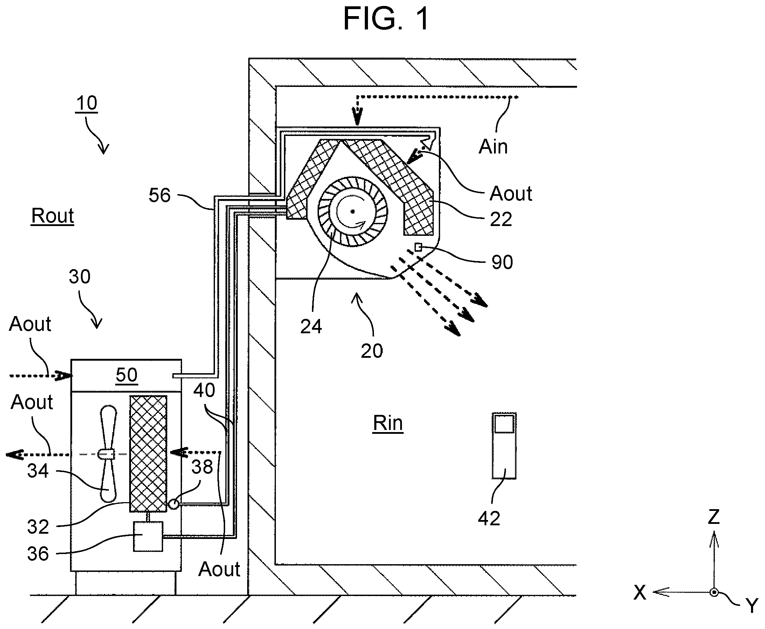

First, a configuration of air conditioner 10 according to the present exemplary embodiment will be described with reference to Fig. 1.

Fig. 1 is a schematic configuration diagram of air conditioner 10.

As illustrated in Fig. 1, air conditioner 10 includes indoor unit 20 that is disposed in indoor space Rin to be air-conditioned, and outdoor unit 30 that is disposed in outdoor space Rout.

Indoor unit 20 is provided with heat exchanger 22 and fan 24. Heat exchanger 22 performs heat exchange with indoor air Ain of indoor space Rin. Fan 24 draws indoor air Ain into indoor unit 20 and blows the air heat-exchanged with heat exchanger 22 into indoor space Rin.

Outdoor unit 30 is provided with heat exchanger 32, fan 34, compressor 36, and expansion valve 38. Heat exchanger 32 performs heat exchange with outdoor air Aout of outdoor space Rout. Fan 34 generates a flow of outdoor air Aout passing through heat exchanger 32.

Heat exchanger 22 of indoor unit 20 and heat exchanger 32, compressor 36, and expansion valve 38 of outdoor unit 30 are connected by refrigerant pipe 40 to constitute a refrigeration cycle of air conditioner 10. With this refrigeration cycle, air conditioner 10 performs a heating operation of blowing heated indoor air Ain into indoor space Rin, a cooling operation of blowing cooled indoor air Ain into indoor space Rin, and a dehumidification operation of blowing dehumidified indoor air Ain into indoor space Rin. In the case of the present exemplary embodiment, air conditioner 10 includes controller 42 that enables a user to select the operation of air conditioner 10 such as the heating operation, the cooling operation, and the dehumidification operation, and to set parameters and the like necessary for the operation, such as temperature setting.

Furthermore, outdoor unit 30 of air conditioner 10 includes ventilation device 50 that supplies outdoor air Aout into indoor space Rin, that is, ventilates indoor space Rin. Although the present exemplary embodiment is described such that outdoor unit 30 includes ventilation device 50, ventilation device 50 does not have to be included in outdoor unit 30.

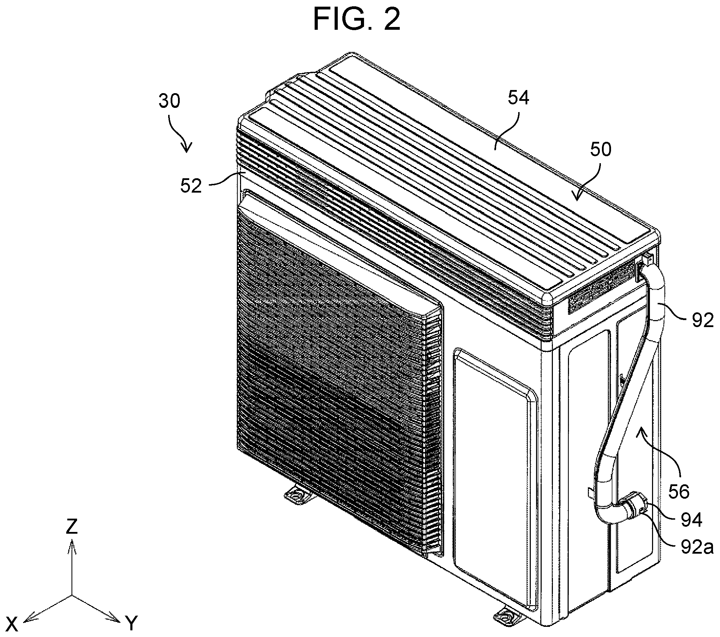

Next, a configuration of ventilation device 50 will be described with reference to Figs. 2 to 8.

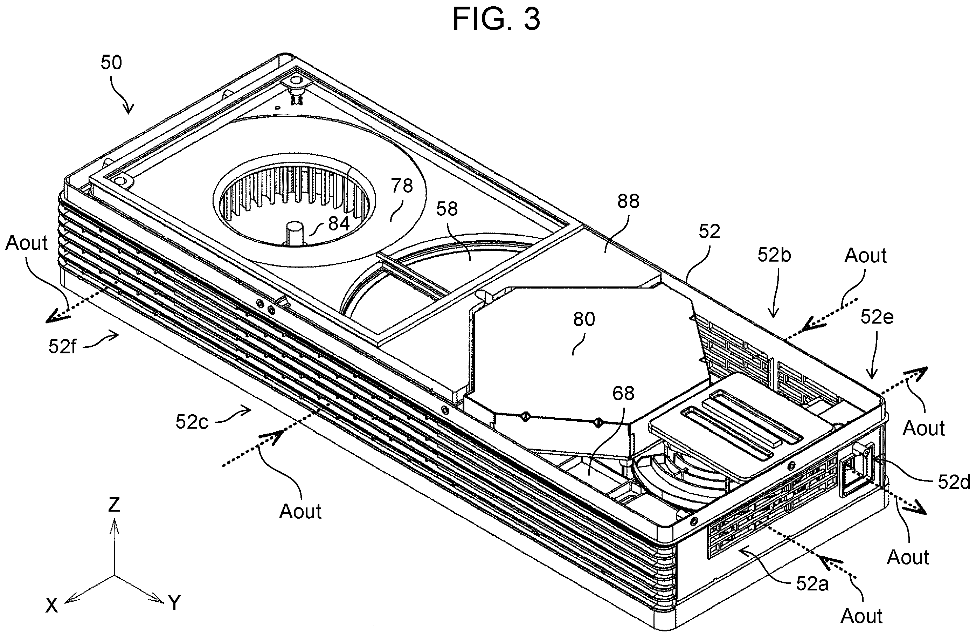

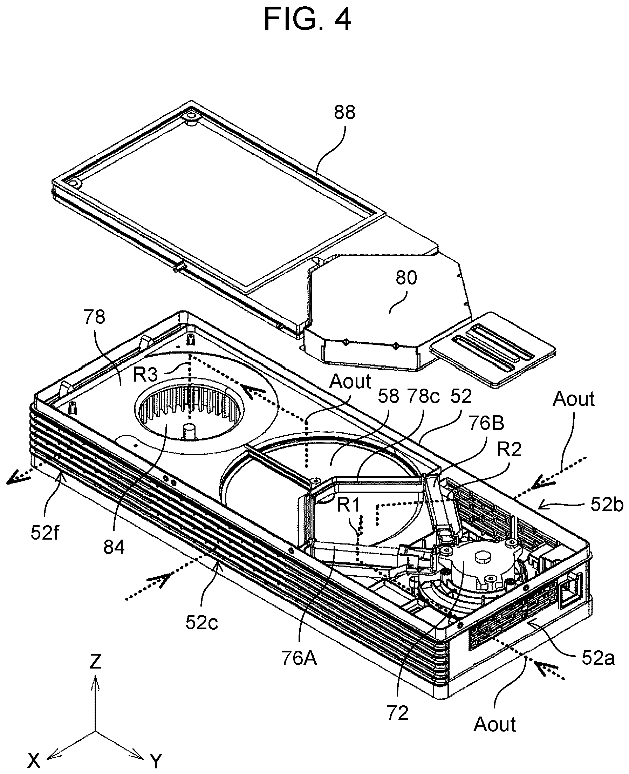

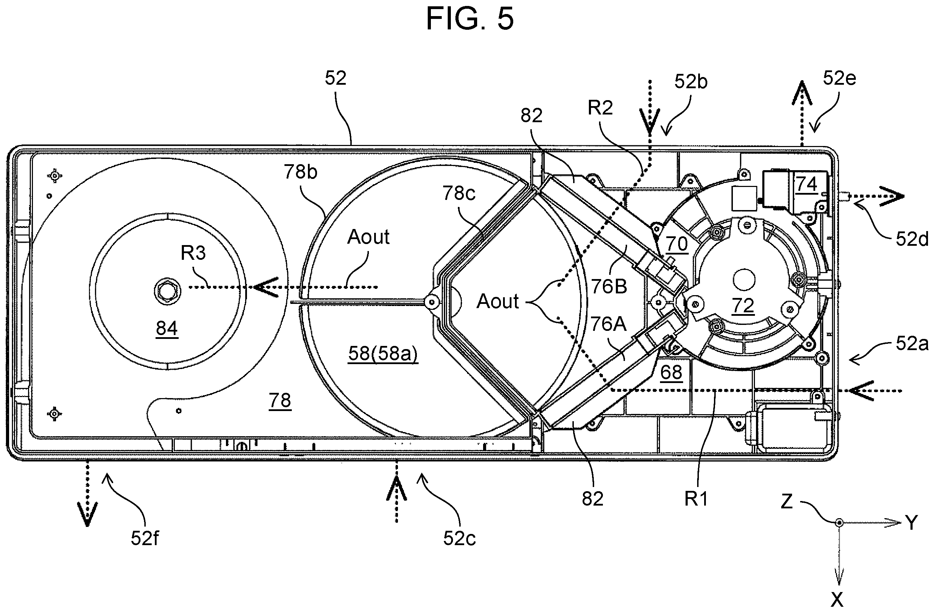

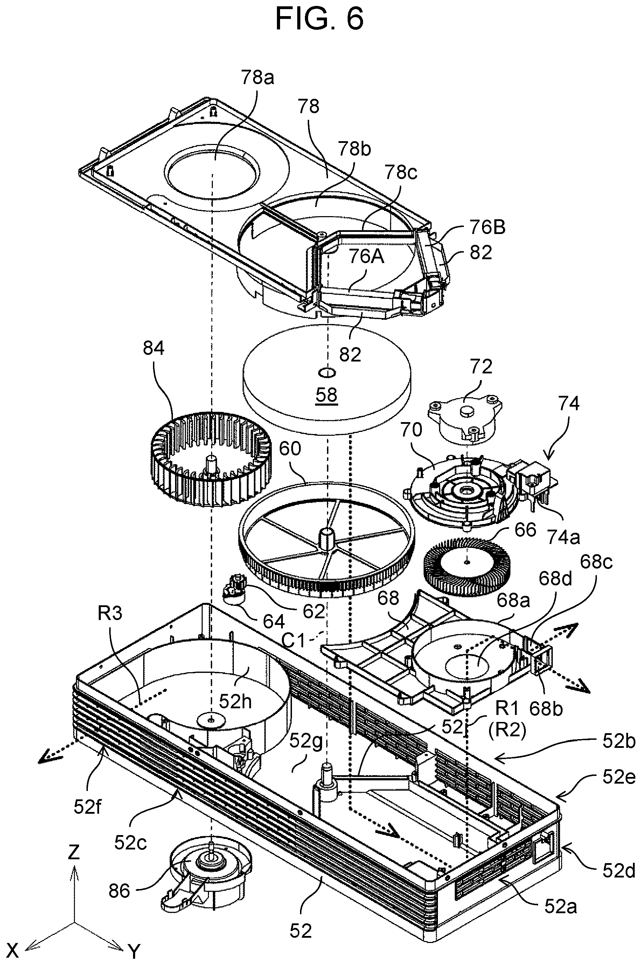

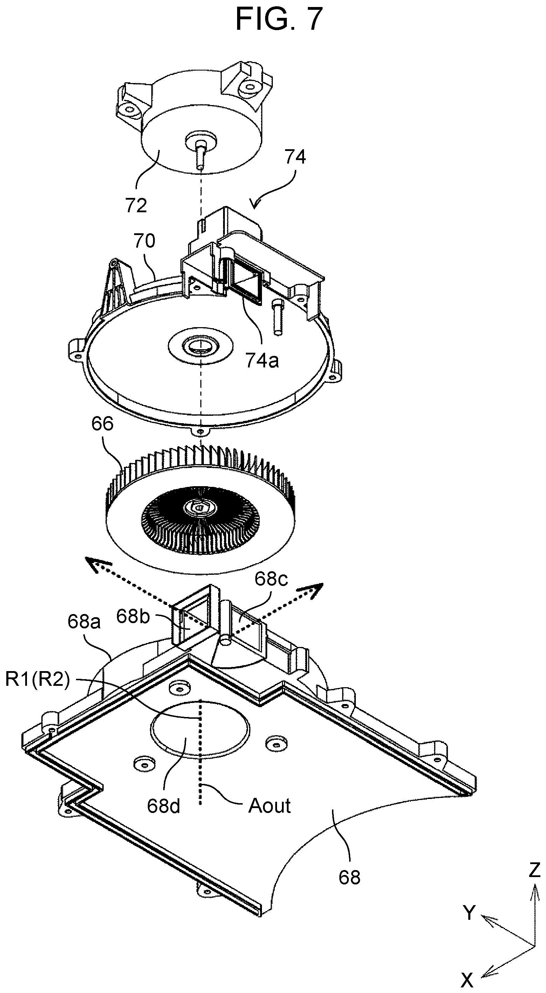

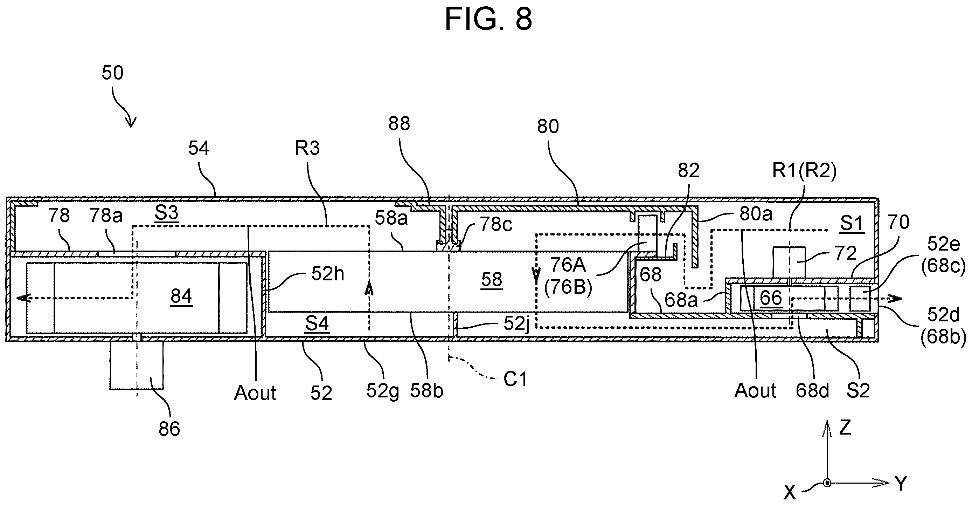

Fig. 2 is a perspective view illustrating an outer appearance of outdoor unit 30. In addition, Fig. 3 is a perspective view illustrating an internal configuration of ventilation device 50. Furthermore, Figs. 4 and 5 are a perspective view and a top view of ventilation device 50 from which some of its components are removed. Moreover, Fig. 6 is an exploded perspective view of ventilation device 50. In addition, Fig. 7 is an exploded perspective view of some components of ventilation device 50 as viewed from a different viewpoint. Furthermore, Fig. 8 is a schematic sectional view of ventilation device 50.

In the case of the present exemplary embodiment, as illustrated in Fig. 2 and Fig. 3, ventilation device 50 has housing 52 with an open top, and top panel 54 that is a lid of housing 52. Housing 52 of ventilation device 50 includes a plurality of intake ports 52a, 52b, 52c, and exhaust ports 52d, 52e, 52f. Intake ports 52a, 52b, 52c are used for drawing outdoor air Aout into housing 52. Exhaust ports 52d, 52e, 52f are used for discharging outdoor air Aout drawn into housing 52 to the outside. Ventilation conduit 56 illustrated in Fig. 2 is connected to exhaust port 52d. As illustrated in Fig. 2, ventilation conduit 56 is attached to a side surface of outdoor unit 30 and is coupled to a ventilation hose that communicates with indoor unit 20. That is, ventilation conduit 56 connects the inside of outdoor unit 30 and the inside of indoor unit 20. Remaining exhaust ports 52e, 52f communicate with outdoor space Rout.

As illustrated in Figs. 4, 5, 6, and 8, ventilation device 50 includes absorbent 58 that absorbs moisture of outdoor air Aout, at the center in housing 52.

Absorbent 58 is a member through which air can pass, and is a member that collects moisture from the passing air or gives moisture to the passing air. In the case of the present exemplary embodiment, absorbent 58 is a disk-shaped member that enables the air passage in the vertical direction (Z-axis direction) and that rotates about rotation center line C1 extending in the vertical direction. As illustrated in Fig. 6, absorbent 58 is held by cylindrical holder 60, and is rotated by absorbent motor 64. Absorbent motor 64 includes gear 62 that meshes with external teeth of holder 60. During operation of ventilation device 50, absorbent 58 continues rotating at a constant rotation speed.

Note that absorbent 58 is preferably formed of a polymeric sorbent that sorbs moisture in the air. The polymeric sorbent is composed of, for example, crosslinked sodium polyacrylate. The polymeric sorbent has a higher rate of absorbing moisture, can desorb the moisture retained therein at a lower heating temperature, and can retain the moisture for a longer time, than an adsorbent such as silica gel or zeolite can.

As illustrated in Figs. 6, 7, and 8, ventilation device 50 also includes first fan 66 that draws outdoor air Aout into ventilation device 50, causes outdoor air Aout to pass through absorbent 58, and blows outdoor air Aout having passed through absorbent 58 toward indoor unit 20.

First fan 66 is disposed on one side in a longitudinal direction (Y-axis direction) of ventilation device 50 relative to absorbent 58. First fan 66 is, for example, a sirocco fan. First fan 66 is accommodated in cylindrical part 68a that is provided in partition wall plate 68. Partition wall plate 68 divides a space on one side in the longitudinal direction relative to absorbent 58 into upper and lower spaces. As illustrated in Fig. 8, partition wall plate 68 forms upper space S1 in contact with a portion of upper surface 58a of absorbent 58, and lower space S2 in contact with a portion of lower surface 58b of absorbent 58.

Opening 68b connected to exhaust port 52d and opening 68c connected to exhaust port 52e are formed in cylindrical part 68a of partition wall plate 68. Through hole 68d for drawing air into first fan 66 in cylindrical part 68a is also formed in partition wall plate 68.

In addition, fan cover 70 that covers first fan 66 is attached to cylindrical part 68a of partition wall plate 68. Fan cover 70 is provided with motor 72 that rotates first fan 66. As illustrated in Fig. 7, fan cover 70 is also provided with damper device 74 that closes one of opening 68b and opening 68c of partition wall plate 68. Damper device 74 includes turnable damper 74a, and is configured to close one of opening 68b and opening 68c of partition wall plate 68 by turning damper 74a.

When motor 72 rotates first fan 66, outdoor air Aout flows into housing 52 through intake ports 52a, 52b of housing 52 as illustrated in Fig. 4. Specifically, as illustrated in Fig. 8, outdoor air Aout inflowing through each of intake ports 52a, 52b flows into upper space S1 above partition wall plate 68 and flows toward an upper portion of absorbent 58. Subsequently, outdoor air Aout passes through absorbent 58 from upper surface 58a toward lower surface 58b of absorbent 58. Outdoor air Aout having passed through absorbent 58 moves in lower space S2 below partition wall plate 68, and passes through through hole 68d of partition wall plate 68 to be drawn into first fan 66. Outdoor air Aout drawn into first fan 66 passes through one of opening 68b and opening 68c that is not closed by damper 74a of damper device 74. That is, outdoor air Aout passes through exhaust port 52d and finally reaches the inside of indoor unit 20, or is discharged to outdoor space Rout through exhaust port 52e. As described above, first fan 66 draws outdoor air Aout into outdoor unit 30, and sends drawn outdoor air Aout toward indoor unit 20 through ventilation conduit 56.

In the case of the present exemplary embodiment, as illustrated in Fig. 4 and Fig. 5, fan cover 70 and motor 72 are disposed between intake port 52a and intake port 52b of housing 52. Therefore, there are substantially two flow channels that pass through absorbent 58 to connect outdoor space Rout and the inside of indoor unit 20, that is, connect with ventilation conduit 56, and allow outdoor air Aout to flow. As illustrated in Fig. 6, two flow channels R1, R2 include a merging channel where the two flow channels merge with each other after passing through absorbent 58. First fan 66 is provided in the merging channel. That is, first fan 66 generates a flow of outdoor air Aout toward indoor unit 20 in flow channels R1, R2. As illustrated in Fig. 5, ventilation device 50 includes first heater 76A and second heater 76B. First heater 76A is provided in flow channel R1 starting from intake port 52a. Second heater 76B is provided in flow channel R2 starting from intake port 52b. The reason why ventilation device 50 is provided with the plurality of flow channels for outdoor air Aout flowing toward indoor unit 20, and first heater 76A and second heater 76B are respectively provided in the flow channels will be described later.

As illustrated in Fig. 4 and Fig. 5, first heater 76A and second heater 76B are disposed near absorbent 58. Specifically, first heater 76A and second heater 76B are disposed on the upstream side relative to absorbent 58 in flow channels R1, R2 of outdoor air Aout. In the case of the present exemplary embodiment, first heater 76A and second heater 76B are provided on partition wall plate 78 (see Fig. 6).

In addition, as illustrated in Fig. 4, first heater 76A, second heater 76B, and a portion of upper surface 58a of absorbent 58 where flow channels R1, R2 pass are covered with heater cover 80. As a result, outdoor air Aout heated by first heater 76A and second heater 76B can pass through absorbent 58. Note that the details of the heating of outdoor air Aout by first heater 76A and second heater 76B will be described later.

First heater 76A and second heater 76B may be heaters having the same heating capacity or heaters having different heating capacities. In addition, first heater 76A and second heater 76B are preferably PTC heaters in which electrical resistance increases with an increase in temperature when a current flows, that is, the PTC heaters capable of preventing an excessive increase in heating temperature. A heater using nichrome wires, carbon fibers, or the like may be used. In this case, since the heating temperature (surface temperature) continues rising as the current flows continuously, it is necessary to monitor the temperature. On the other hand, in the case of the PTC heater, the heater itself adjusts the heating temperature within a certain temperature range, and thus, it is not necessary to monitor the heating temperature. In this respect, the PTC heater is more preferable.

As illustrated in Fig. 8, first heater 76A and second heater 76B are covered with heater cover 80. Therefore, in order to enter first heater 76A and second heater 76B, outdoor air Aout flowing through flow channels R1, R2 first descends along an outer side surface of side wall 80a. Outdoor air Aout subsequently enters a gap and moves upward. Outdoor air Aout then moves through first heater 76A and second heater 76B. After that, outdoor air Aout descends toward upper surface 58a of absorbent 58. That is, two flow channels R1, R2 include a labyrinth through which outdoor air Aout passes.

Since flow channels R1, R2 through which outdoor air Aout flows include the labyrinth through which outdoor air Aout passes, it is possible to prevent dust, sand, and the like contained in outdoor air Aout from reaching ventilation conduit 56, indoor unit 20, and indoor space Rin. That is, when outdoor air Aout moves through the labyrinth, dust, sand, and the like are separated from outdoor air Aout by gravity. Tray 82 is provided in a portion of partition wall plate 78 near first heater 76A and second heater 76B. Tray 82 receives and collects the dust and the like separated from outdoor air Aout.

As illustrated in Figs. 4, 5, 6, and 8, ventilation device 50 includes flow channel R3 other than flow channels R1, R2, as a flow channel of outdoor air Aout.

Unlike flow channels R1, R2, flow channel R3 of outdoor air Aout is not connected to the inside of indoor unit 20. Flow channel R3 is a flow channel that passes through absorbent 58 and allows outdoor air Aout to flow from outdoor space Rout to outdoor space Rout.

Specifically, flow channel R3 starts from intake port 52c, passes through absorbent 58 from lower surface 58b toward upper surface 58a, and reaches exhaust port 52f. Ventilation device 50 includes second fan 84 that generates a flow of outdoor air Aout in flow channel R3.

As illustrated in Fig. 6, second fan 84 is disposed on the other side in the longitudinal direction (Y-axis direction) of ventilation device 50 relative to absorbent 58. Second fan 84 is, for example, a sirocco fan. Second fan 84 is rotated by motor 86 that is attached to an outer side surface of bottom plate 52g of housing 52. In addition, second fan 84 is accommodated in cylindrical part 52h that is provided on an inner side surface of bottom plate 52g of housing 52. An inner space of cylindrical part 52h communicates with exhaust port 52f.

In addition, partition wall plate 78 that covers second fan 84 is mounted on cylindrical part 52h of housing 52. Partition wall plate 78 divides a space on the other side in the longitudinal direction (Y-axis direction) relative to absorbent 58 into upper and lower spaces. In addition, partition wall plate 78 has through hole 78a for drawing outdoor air Aout into second fan 84. Partition wall plate 78 is further provided with absorbent accommodating part 78b that rotatably accommodates absorbent 58 without covering upper surface 58a.

When motor 86 rotates second fan 84, outdoor air Aout flows into housing 52 through intake port 52c of housing 52 as illustrated in Fig. 4. Specifically, as illustrated in Fig. 8, outdoor air Aout inflowing through intake port 52c flows into lower space S4 below partition wall plate 78 and flows toward a lower portion of absorbent 58. Subsequently, outdoor air Aout passes through absorbent 58 from lower surface 58b toward upper surface 58a of absorbent 58. Outdoor air Aout having passed through absorbent 58 moves in upper space S3 above partition wall plate 78, and passes through through hole 78a of partition wall plate 78 to be drawn into second fan 84. Outdoor air Aout drawn into second fan 84 is discharged to outdoor space Rout through exhaust port 52f.

To block the flow of outdoor air Aout between lower space S2 and lower space S4 below absorbent 58, housing 52 includes seal 52j on bottom plate 52g as illustrated in Figs. 6 and 8. In addition, to block the flow of outdoor air Aout between upper spaces S1, S3 above absorbent 58, partition wall plate 78 includes seal 78c, and sealing member 88 that seals a gap between partition wall plate 78 and top panel 54 is provided between partition wall plate 78 and top panel 54. As a result, outdoor air Aout flowing through flow channels R1, R2 and outdoor air Aout flowing through flow channel R3 can pass through absorbent 58 at different positions, and are prevented from being mixed with each other.

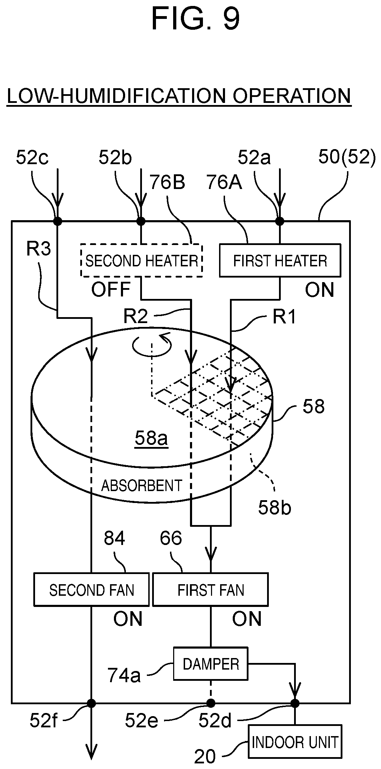

The configuration of ventilation device 50 has been described so far. An operation of ventilation device 50 will be described below with reference to Figs. 9 to 14.

Ventilation device 50 is configured to perform a humidification operation, a dehumidification operation, a regeneration operation, and a ventilation operation described below. Specifically, ventilation device 50 includes a control device that performs the humidification operation, the dehumidification operation, the regeneration operation, and the ventilation operation by controlling first fan 66, second fan 84, first heater 76A, second heater 76B, damper device 74 (damper 74a), and the like. The control device includes, for example, a computer system including a processor and a memory. The processor executes a program stored in the memory, and thus, the computer system functions as the control device. Here, the program executed by the processor is assumed to be recorded in advance in the memory of the computer system. The program may be provided by being recorded in a non-transitory recording medium such as a memory card, or may be provided through a telecommunication line such as the Internet.

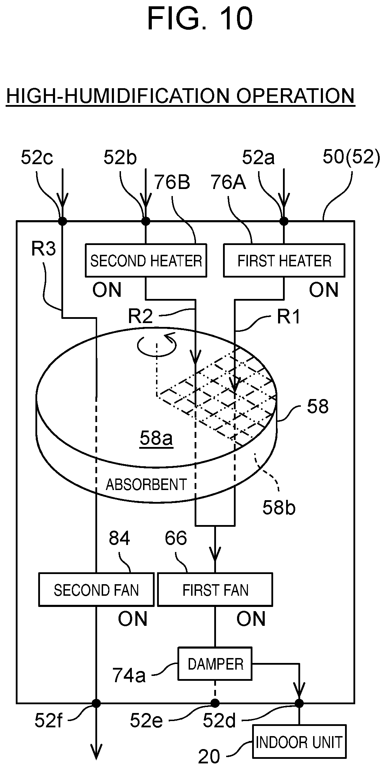

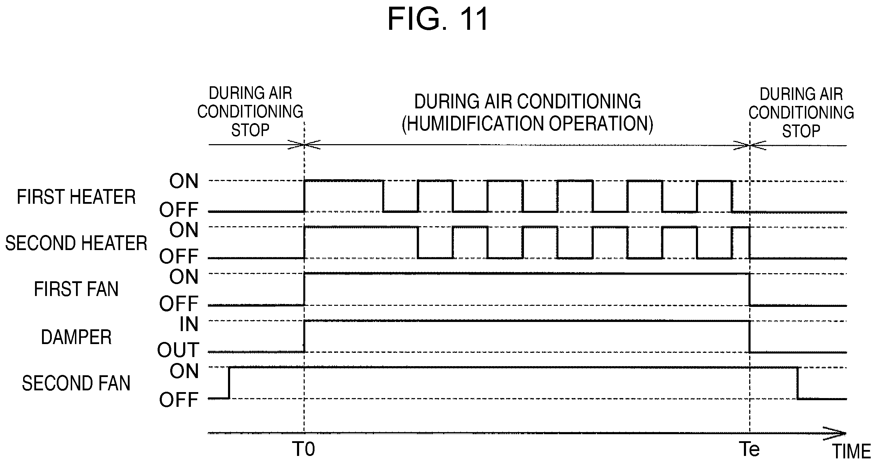

Figs. 9 and 10 are diagrams illustrating the humidification operation of ventilation device 50. In addition, Fig. 11 illustrates a timing chart of the humidification operation.

As illustrated in Figs. 9, 10, and 11, the humidification operation of ventilation device 50 is performed in a state where at least one of first heater 76A and second heater 76B (in the present exemplary embodiment, first heater 76A) is in operation. When indoor humidity of indoor space Rin is to be increased a little (low-humidification operation), at least one of first heater 76A and second heater 76B operates as illustrated in Fig. 9. On the other hand, when the indoor humidity of indoor space Rin is to be increased a lot (high-humidification operation), both of first heater 76A and second heater 76B operate as illustrated in Fig. 10. In addition, both of first fan 66 and second fan 84 rotate during the humidification operation. Furthermore, during the humidification operation, damper 74a closes exhaust port 52e in order to direct outdoor air Aout to indoor unit 20 (IN state).

According to such a humidification operation, outdoor air Aout heated by at least one of first heater 76A and second heater 76B takes moisture retained by absorbent 58 and is supplied to indoor space Rin. As a result, indoor space Rin is humidified. In addition, absorbent 58 whose moisture is taken by heated outdoor air Aout collects moisture from outdoor air Aout flowing through flow channel R3. Absorbent 58 can thereby continue retaining a certain amount of moisture. As a result, ventilation device 50 can continue the humidification operation.

By using the plurality of heaters (first heater 76A, second heater 76B) as the heating means for outdoor air Aout in this manner, it is possible to more finely adjust the amount of moisture of outdoor air Aout (the amount of moisture taken from absorbent 58) as compared with a case of using one heating means. That is, the humidification level of indoor space Rin can be finely controlled. For example, in a case where first heater 76A and second heater 76B are of the type operating at a constant temperature, the moisture amount of outdoor air Aout can be adjusted in three stages by turning ON/OFF each of first heater 76A and second heater 76B. As a result, excessive humidification can be prevented, and wasteful power consumption by the heaters can be prevented (as compared with the case of using one heating means).

In a case where each of first heater 76A and second heater 76B is a heater whose output is adjustable as well as being turned ON/OFF, the moisture amount of outdoor air Aout (the moisture amount taken from absorbent 58) can be more finely adjusted. As a result, in a case where the indoor humidity is maintained at a set value set by the user, it is easy to maintain the set value. In this case, controller 42 illustrated in Fig. 1 is configured to enable the user to set the indoor humidity. Indoor unit 20 is provided with indoor humidity sensor 90 that measures the indoor humidity and outputs a measured value of the measured indoor humidity. The outputs of first heater 76A and second heater 76B are controlled such that the indoor humidity (measured value) output by indoor humidity sensor 90 becomes the set value. For example, when a difference between the measured value by indoor humidity sensor 90 and the set value is larger than a predetermined value (for example, 30%), both of first heater 76A and second heater 76B operate at the maximum output. For example, when the difference between the measured value by indoor humidity sensor 90 and the set value is smaller than the predetermined value, only one of first heater 76A and second heater 76B operates to adjust the output value.

In addition, for example, when the measured value by indoor humidity sensor 90 substantially matches the set value, a rotation speed of first fan 66 may be adjusted in a state where the outputs of first heater 76A and second heater 76B are maintained constant. By adjusting the rotation speed of first fan 66 on the basis of the measured value by indoor humidity sensor 90, the indoor humidity can be more quickly adjusted although the adjustable range is smaller, as compared with the case where the indoor humidity is adjusted by first heater 76A and second heater 76B.

Furthermore, the output adjustment of first heater 76A and second heater 76B may be executed on the basis of the moisture amount retained by absorbent 58. The moisture amount that outdoor air Aout can take from absorbent 58 and can retain is determined by the temperature of outdoor air Aout, that is, the outputs of first heater 76A and second heater 76B. Therefore, in a case where the moisture amount retained by absorbent 58 is smaller than the moisture amount that can be retained by outdoor air Aout heated by first heater 76A and second heater 76B at the maximum output, heating outdoor air Aout wastefully consumes power. In order to prevent such wasteful power consumption of the heaters, the output adjustment of first heater 76A and second heater 76B is preferably executed on the basis of the moisture amount retained by absorbent 58. Note that the moisture amount retained by absorbent 58 can be estimated on the basis of, for example, humidity of outdoor space Rout and a rotation time of second fan 84. In this case, outdoor unit 30 is provided with an outdoor humidity sensor (not illustrated) that measures outdoor humidity.

Furthermore, as illustrated in Fig. 11, second fan 84 may operate for a predetermined time after air conditioner 10 stops an air conditioning operation (after timing Te). In this case, second fan 84 of ventilation device 50 rotates while fan 24 of indoor unit 20, and fan 34 and compressor 36 of outdoor unit 30 stop. As a result, moisture is stored in absorbent 58 after the stop of the air conditioning operation of air conditioner 10. As a result, in a case where the humidification operation is performed at the same time as the start of the subsequent air conditioning operation, the humidification operation can be reliably performed in a state where absorbent 58 has a sufficient moisture retention amount without any shortage. That is, it is possible to sufficiently and quickly humidify indoor space Rin immediately after the start of the air conditioning operation.

In addition, as illustrated in Fig. 11, second fan 84 may start to operate before the start of the air conditioning operation of air conditioner 10 (before timing T0). As a result, moisture is stored in absorbent 58 before the start of the air conditioning operation of air conditioner 10. As a result, in a case where the humidification operation is performed at the same time as the start of the subsequent air conditioning operation, the humidification operation can be reliably performed in a state where absorbent 58 has a sufficient moisture retention amount without any shortage. In this case, controller 42 illustrated in Fig. 1 is configured to enable the user to set a time to start the air conditioning operation, and second fan 84 starts to rotate from a predetermined time before the start time. The predetermined time is, for example, a time required for the moisture retention amount of absorbent 58 to increase from 0 to the maximum.

Next, the dehumidification operation and the regeneration operation of ventilation device 50 will be described.

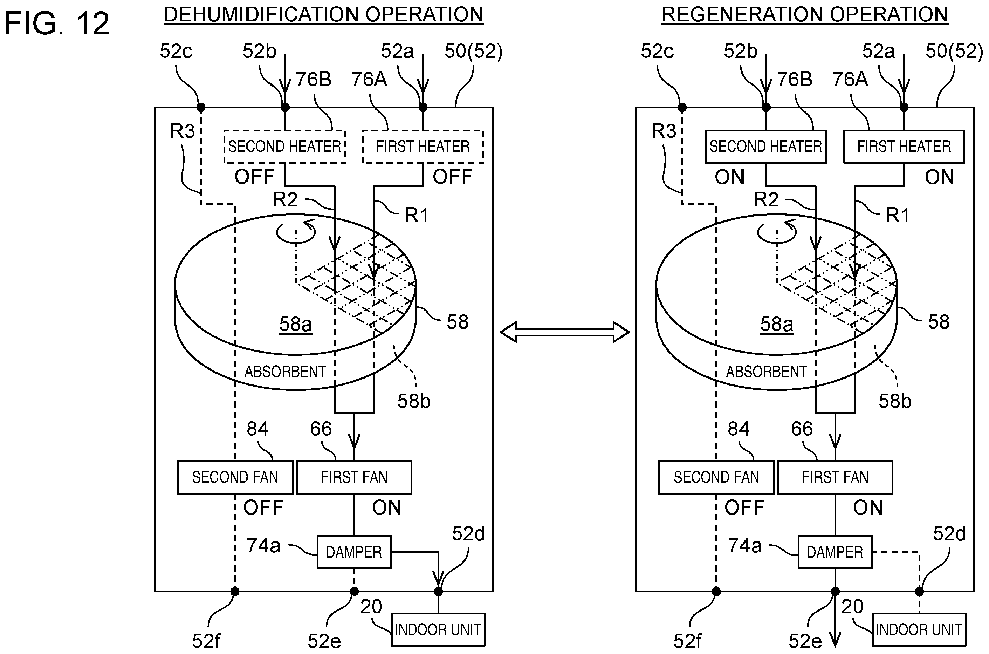

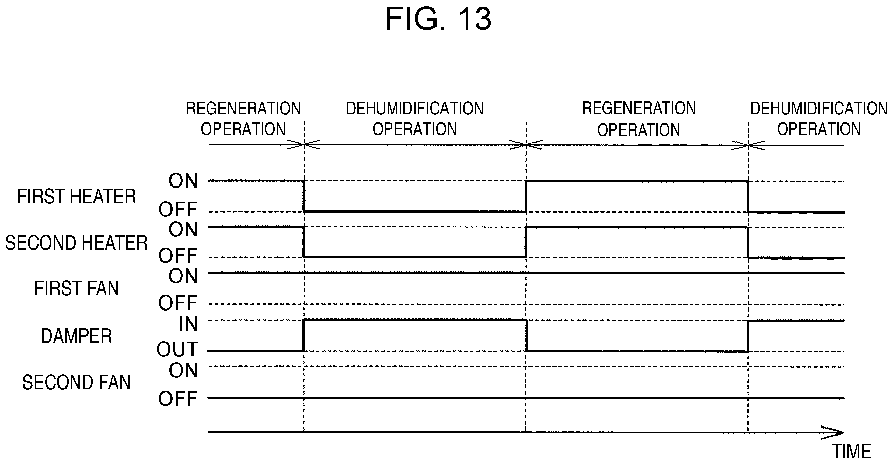

Fig. 12 is a diagram illustrating the dehumidification operation and the regeneration operation of ventilation device 50. In addition, Fig. 13 is a timing chart of the dehumidification operation and the regeneration operation.

As illustrated in Figs. 12 and 13, the dehumidification operation of ventilation device 50 is performed in a state where first heater 76A and second heater 76B stop operating (OFF state). In addition, first fan 66 rotates and second fan 84 stops during the dehumidification operation. During the dehumidification operation, damper 74a closes exhaust port 52e in order to direct outdoor air Aout to indoor unit 20 (IN state).

According to such a dehumidification operation, outdoor air Aout passes through absorbent 58 without being heated. As a result, the moisture of outdoor air Aout is collected by absorbent 58, and outdoor air Aout is supplied to indoor space Rin in a dried state. As a result, indoor space Rin is dehumidified.

While the dehumidification operation is continued, absorbent 58 continues collecting the moisture of outdoor air Aout. Therefore, absorbent 58 eventually reaches a saturation state in which absorbent 58 cannot retain moisture any more. Therefore, the regeneration operation for regenerating the collecting capacity of absorbent 58 is performed.

As illustrated in Figs. 12 and 13, the regeneration operation of ventilation device 50 is performed in a state where first heater 76A and second heater 76B are in operation (ON state). In addition, first fan 66 rotates and second fan 84 stops during the regeneration operation. During the regeneration operation, damper 74a closes exhaust port 52d in order to direct outdoor air Aout not to indoor unit 20 but to outdoor space Rout (OUT state).

According to such a regeneration operation, outdoor air Aout heated by both of first heater 76A and second heater 76B takes the moisture retained by absorbent 58 and is discharged to outdoor space Rout. As a result, absorbent 58 is dried, and its moisture collecting capacity is regenerated.

The regeneration operation is performed as a set with the dehumidification operation. Specifically, the regeneration operation is performed in a case where the duration of the dehumidification operation is longer than a time until absorbent 58 is saturated. In this case, as illustrated in Fig. 13, the dehumidification operation and the regeneration operation are alternately performed. As a result, the dehumidification operation is intermittently continued.

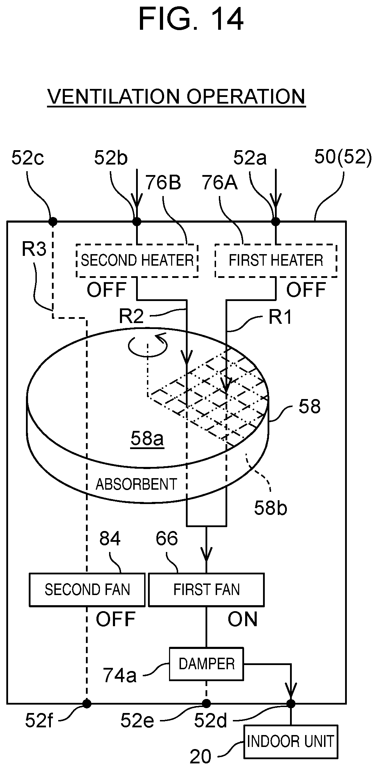

Fig. 14 is a diagram illustrating the ventilation operation of ventilation device 50.

As illustrated in Fig. 14, the ventilation operation of ventilation device 50 is performed in a state where first heater 76A and second heater 76B stop operating (OFF state). In addition, first fan 66 rotates and second fan 84 stops during the ventilation operation. During the ventilation operation, damper 74a closes exhaust port 52e in order to direct outdoor air Aout to indoor unit 20 (IN state).

According to such a ventilation operation, outdoor air Aout is directly supplied to indoor space Rin. As a result, indoor space Rin is ventilated.

Which one of the humidification operation, the dehumidification operation, and the ventilation operation of ventilation device 50 is to be performed is determined by, for example, the user. For example, when the user selects the operation of ventilation device 50 using controller 42, the operation selected by the user among the humidification operation, the dehumidification operation, and the ventilation operation is performed. In addition, in a case where air conditioner 10 is configured such that the user can set the indoor humidity using controller 42, the humidification operation and the dehumidification operation are selectively performed such that the measured value by indoor humidity sensor 90 becomes the set value. Note that the regeneration operation is performed on the basis of the duration of the dehumidification operation or the moisture retention amount of absorbent 58, instead of the operation by the user.

When outdoor air Aout flows into ventilation conduit 56 illustrated in Fig. 1 by the operation of ventilation device 50 (particularly, the humidification operation), dew condensation may occur and water may be accumulated in ventilation conduit 56 depending on the surrounding environment or the season. Specifically, water may be accumulated in a lowermost part of ventilation conduit 56.

In the case of the present exemplary embodiment, as illustrated in Fig. 2, ventilation conduit 56 includes fixed pipe 92, ventilation hose (not illustrated), and connector 94. Fixed pipe 92 is fixed to the side surface of outdoor unit 30. The ventilation hose connects fixed pipe 92 and indoor unit 20. Connector 94 is attached to a distal end of the ventilation hose and detachably connected to distal end 92a of fixed pipe 92. Since distal end 92a of fixed pipe 92 is located at the lowest position in ventilation conduit 56, there is a possibility that water is accumulated in distal end 92a of fixed pipe 92.

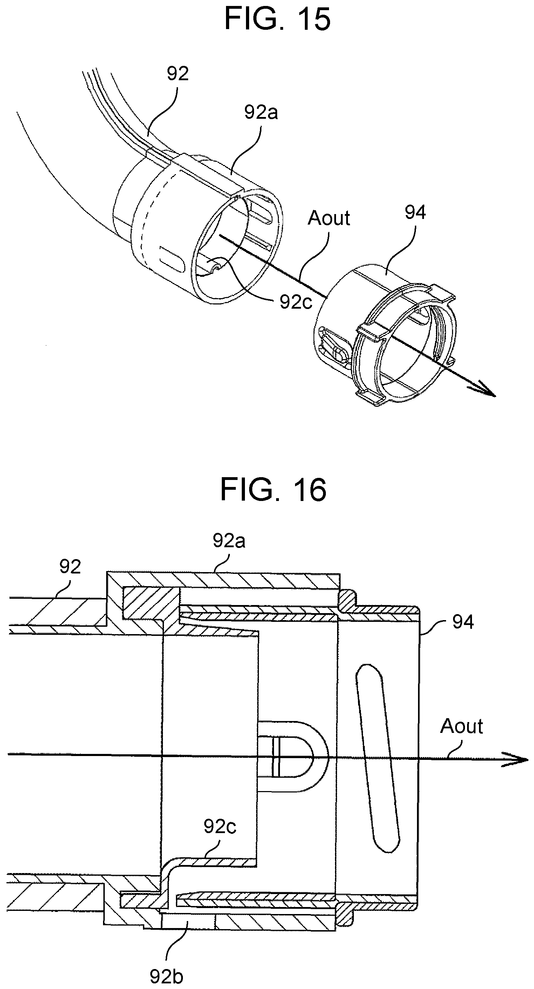

Fig. 15 is an exploded view of a portion of ventilation conduit 56. In addition, Fig. 16 is a sectional view of a portion of ventilation conduit 56.

As illustrated in Fig. 16, through hole 92b is formed in a lowermost part of distal end 92a of fixed pipe 92. That is, ventilation conduit 56 has through hole 92b in the lowermost part of ventilation conduit 56. Water accumulated in ventilation conduit 56 is discharged to the outside through through hole 92b. In order to prevent outdoor air Aout flowing from outdoor unit 30 toward indoor unit 20 from leaking to the outside through through hole 92b, fixed pipe 92 (that is, ventilation conduit 56) includes semi-cylindrical hood 92c that extends from the side closer to outdoor unit 30 to cover through hole 92b. In the present exemplary embodiment, hood 92c has a semi-cylindrical shape, but may have another shape such as a triangular shape, a rectangular shape, or a polygonal shape, for example.

Furthermore, a flow channel of water that enters hood 92c and reaches through hole 92b is provided such that a direction in which water flows is opposite to a direction of outdoor air Aout. As a result, outdoor air Aout is prevented from entering hood 92c and unnecessarily escaping from through hole 92b. In addition, through hole 92b desirably has a diameter more than or equal to 2.5 mm. This is to prevent a waterdrop, which has a diameter of about 2 mm, from bridging and blocking through hole 92b.

As described above, air conditioner 10 according to the present exemplary embodiment can prevent the accumulation of water in ventilation conduit 56 when humidified outdoor air Aout is supplied from outdoor unit 30 to indoor unit 20 through ventilation conduit 56.

Air conditioner 10 according to the exemplary embodiment of the present disclosure is the air conditioner including indoor unit 20 and outdoor unit 30, the air conditioner including ventilation conduit 56 and the fan (first fan 66). Here, first fan 66 is an example of the fan according to the present disclosure. Ventilation conduit 56 connects the inside of outdoor unit 30 and the inside of indoor unit 20. The fan (first fan 66) draws outdoor air Aout into outdoor unit 30, and sends the drawn outdoor air Aout toward indoor unit 20 through ventilation conduit 56. In air conditioner 10 according to the present disclosure, ventilation conduit 56 includes through hole 92b in the lowermost part of ventilation conduit 56.

In addition, in air conditioner 10 according to the exemplary embodiment of the present disclosure, ventilation conduit 56 includes hood 92c that extends from the side closer to outdoor unit 30 and covers through hole 92b.

Furthermore, air conditioner 10 according to the exemplary embodiment of the present disclosure also includes absorbent 58, flow channels R1, R2, and the heater (first heater 76A, second heater 76B). Here, first heater 76A and second heater 76B are examples of the heater according to the present disclosure. Absorbent 58 absorbs the moisture of outdoor air Aout. Flow channels R1, R2 pass through absorbent 58 to connect with ventilation conduit 56. The heater (first heater 76A, second heater 76B) heats outdoor air Aout on the upstream side relative to absorbent 58 in flow channels R1, R2. Air conditioner 10 according to the exemplary embodiment of the present disclosure performs the humidification operation. In the humidification operation, the fan (first fan 66) generates the flow of outdoor air Aout toward indoor unit 20 in flow channels R1, R2. In addition, in the humidification operation, the heater (first heater 76A, second heater 76B) heats outdoor air Aout, and heated outdoor air Aout takes the moisture from absorbent 58 and flows toward indoor unit 20.

In addition, in air conditioner 10 according to the exemplary embodiment of the present disclosure, the heater (first heater 76A, second heater 76B) is the PTC heater.

Furthermore, in air conditioner 10 according to the exemplary embodiment of the present disclosure, absorbent 58 is the polymeric sorbent.

Moreover, in air conditioner 10 according to the exemplary embodiment of the present disclosure, flow channels R1, R2 include the labyrinth that allows outdoor air Aout to pass.

It has been described that air conditioner 10 according to the exemplary embodiment of the present disclosure includes indoor unit 20 and outdoor unit 30, and outdoor unit 30 includes ventilation device 50. However, air conditioner 10 according to the exemplary embodiment of the present disclosure may be modified such that outdoor unit 30 and ventilation device 50 are configured separately, that is, air conditioner 10 includes indoor unit 20, outdoor unit 30, and ventilation device 50 (first modification). Furthermore, air conditioner 10 according to the exemplary embodiment of the present disclosure may be modified so as to include indoor unit 20 and outdoor unit 30, and include at least ventilation conduit 56 and the fan (first fan 66) (second modification).

In addition, air conditioner 10 according to the exemplary embodiment of the present disclosure and the air conditioners according to the first and second modifications described above have been described as including the two flow channels (flow channel R1, flow channel R2) and the two heaters (first heater 76A, second heater 76B). However, air conditioner 10 according to the exemplary embodiment of the present disclosure and the air conditioners according to the first and second modifications described above may be modified into a configuration including flow channel R1 and first heater 76A, or a configuration including flow channel R2 and second heater 76B (third modification). That is, for example, the air conditioner according to the third modification includes flow channel R1 and the heater (first heater 76A). Flow channel R1 passes through absorbent 58 to connect with ventilation conduit 56. The heater (first heater 76A) heats outdoor air Aout on the upstream side relative to absorbent 58 in flow channel R1.

Although the present disclosure has been described above by taking the above exemplary embodiment (including the first to third modifications) as an example, the present disclosure is not limited to the above exemplary embodiment.

For example, in the case of the above exemplary embodiment, first heater 76A and second heater 76B are provided as the heating means for heating outdoor air Aout. However, the number of heaters as the heating means is not limited thereto. The number of means for heating outdoor air Aout may be one.

In addition, in the case of the above exemplary embodiment, the dehumidification operation is performed to lower the indoor humidity. However, the purpose of performing the dehumidification operation is not limited thereto. For example, the dehumidification operation may be performed to dry heat exchanger 22 of indoor unit 20 to which waterdrops adhere after the cooling operation. In this case, indoor unit 20 is configured such that outdoor air Aout dried by the dehumidification operation is blown toward heat exchanger 22.

That is, in a broad sense, the air conditioner according to the exemplary embodiment of the present disclosure is an air conditioner including an indoor unit and an outdoor unit, the air conditioner including a ventilation conduit and a fan. The ventilation conduit connects an inside of the outdoor unit and an inside of the indoor unit. The fan draws outdoor air into the outdoor unit, and sends the drawn outdoor air toward the indoor unit through the ventilation conduit. In the air conditioner according to the present disclosure, the ventilation conduit includes a through hole in a lowermost part of the ventilation conduit.

### INDUSTRIAL APPLICABILITY

The present disclosure is applicable to any air conditioner including an indoor unit and an outdoor unit.

### REFERENCE MARKS IN THE DRAWINGS

- 10: air conditioner
- 20: indoor unit
- 22: heat exchanger
- 24: fan
- 30: outdoor unit
- 32: heat exchanger
- 34: fan
- 36: compressor
- 38: expansion valve
- 40: refrigerant pipe
- 42: controller
- 50: ventilation device
- 52: housing
- 52a: intake port
- 52b: intake port
- 52c: intake port
- 52d: exhaust port
- 52e: exhaust port
- 52f: exhaust port
- 52g: bottom plate
- 52h: cylindrical part
- 52j: seal
- 54: top panel
- 56: ventilation conduit
- 58: absorbent
- 58a: upper surface
- 58b: lower surface
- 60: holder
- 62: gear
- 64: absorbent motor
- 66: first fan
- 68: partition wall plate
- 68a: cylindrical part
- 68b: opening
- 68c: opening
- 68d: through hole
- 70: fan cover
- 72: motor
- 74: damper device
- 74a: damper
- 76A: first heater
- 76B: second heater
- 78: partition wall plate
- 78a: through hole
- 78b: absorbent accommodating part
- 78c: seal
- 80: heater cover
- 80a: side wall
- 82: tray
- 84: second fan
- 86: motor
- 88: sealing member
- 90: indoor humidity sensor
- 92: fixed pipe
- 92a: distal end
- 92b: through hole
- 92c: hood
- 94: connector
- Ain: indoor air
- Aout: outdoor air
- C1: rotation center line
- R1: flow channel
- R2: flow channel
- R3: flow channel
- Rin: indoor space
- Rout: outdoor space
- S1: upper space
- S2: lower space
- S3: upper space
- S4: lower space
- T0: timing
- Te: timing

## Claims

1. An air conditioner (10) including an indoor unit (20) and an outdoor unit (30), the air conditioner (10) comprising:
a ventilation conduit (56) that connects an inside of the outdoor unit (30) and an inside of the indoor unit (20); and
a fan (66) that draws outdoor air (Aout) into the outdoor unit (30), and sends the drawn outdoor air (Aout) toward the indoor unit (20) through the ventilation conduit (56),
wherein the ventilation conduit (56) includes a fixed pipe (92), a ventilation hose and a connector (94),
wherein the fixed pipe (92) is fixed to the outdoor unit (30),
wherein a distal end (92a) of the fixed pipe (92) is located at the lowest position in the ventilation conduit (56),
wherein a through hole (92b) is formed in a lowermost part of the distal end (92a) of the fixed pipe (92) of the ventilation conduit (56), and
wherein the ventilation conduit (56) includes a hood (92c) that extends from a side closer to the outdoor unit (30) and covers the through hole (92b), wherein the hood (92c) is configured such that a flow channel for water accumulated in the ventilation conduit (56) entering the hood (92c) and reaching the through hole (92b) is provided such that a direction in which water flows is opposite to a direction of the outdoor air (Aout).

2. The air conditioner (10) according to claim 1, comprising:
an absorbent (58) that is configured to absorb moisture of the outdoor air;
a flow channel (R1, R2) that passes through the absorbent (58) to connect with the ventilation conduit (56); and
a heater (76A, 76B) that is configured to heat the outdoor air on an upstream side relative to the absorbent (58) in the flow channel (R1, R2),
wherein the air conditioner (10) is configured to perform a humidification operation
with the fan (66) generating a flow of the outdoor air (Aout) toward the indoor unit (20) in the flow channel (R1, R2),
the heater (76A, 76B) heating the outdoor air (Aout), and the heated outdoor air taking the moisture from the absorbent (58) and flowing toward the indoor unit (20).

3. The air conditioner (10) according to claim 2, wherein the heater (76A, 76B) is a positive temperature coefficient (PTC) heater.

4. The air conditioner (10) according to claim 2 or 3, wherein the absorbent (58) is a polymeric sorbent.

5. The air conditioner (10) according to any one of claims 2 to 4, wherein the flow channel (R1, R2) includes a labyrinth that allows the outdoor air (Aout) to pass.

## Patentansprüche

1. Klimaanlage (10) mit einer Inneneinheit (20) und einer Außeneinheit (30), wobei die Klimaanlage (10) umfasst:
einen Lüftungskanal (56), der ein Inneres der Außeneinheit (30) und ein Inneres der Inneneinheit (20) verbindet; und
ein Gebläse (66), das Außenluft (Aout) in die Außeneinheit (30) saugt und die angesaugte Außenluft (Aout) durch den Lüftungskanal (56) in Richtung zu der Inneneinheit (20) leitet,
wobei der Lüftungskanal (56) ein festes Rohr (92), einen Lüftungsschlauch und einen Verbinder (94) aufweist,
wobei das feste Rohr (92) an der Außeneinheit (30) befestigt ist,
wobei ein distales Ende (92a) des festen Rohrs (92) an der niedrigsten Position in dem Lüftungskanal (56) angeordnet ist,
wobei ein Durchgangsloch (92b) in einem untersten Teil des distalen Endes (92a) des festen Rohrs (92) des Lüftungskanals (56) ausgebildet ist, und
wobei der Lüftungskanal (56) eine Haube (92c) aufweist, die sich von einer Seite näher an der Außeneinheit (30) ausgehend erstreckt und das Durchgangsloch (92b) abdeckt, wobei die Haube (92c) so konfiguriert ist, dass ein Strömungskanal für in dem Lüftungskanal (56) angesammeltes Wasser, das in die Haube (92c) eintritt und das Durchgangsloch (92b) erreicht, so vorgesehen ist, dass eine Richtung, in die das Wasser fließt, entgegengesetzt zu einer Richtung der Außenluft (Aout) ist.

2. Klimaanlage (10) nach Anspruch 1, umfassend:
ein Absorptionsmittel (58), das dazu konfiguriert ist, Feuchtigkeit aus der Außenluft zu absorbieren;
einen Strömungskanal (R1, R2), der durch das Absorptionsmittel (58) hindurchführt, um eine Verbindung mit dem Lüftungskanal (56) herzustellen; und
eine Heizeinrichtung (76A, 76B), die dazu konfiguriert ist, die Außenluft auf einer bezüglich des Absorptionsmittels (58) stromaufwärts gelegenen Seite in dem Strömungskanal (R1, R2) zu erwärmen,
wobei die Klimaanlage (10) dazu konfiguriert ist, einen Befeuchtungsvorgang durchzuführen,
wobei das Gebläse (66) einen Strom der Außenluft (Aout) in Richtung zu der Inneneinheit (20) in dem Strömungskanal (R1, R2) erzeugt,
die Heizeinrichtung (76A, 76B) die Außenluft (Aout) erwärmt, und die erwärmte Außenluft die Feuchtigkeit aus dem Absorptionsmittel (58) aufnimmt und in Richtung zu der Inneneinheit (20) strömt.

3. Klimaanlage (10) nach Anspruch 2, wobei die Heizeinrichtung (76A, 76B) eine Heizeinrichtung mit positivem Temperaturkoeffizienten (PTC) ist.

4. Klimaanlage (10) nach Anspruch 2 oder 3, wobei das Absorptionsmittel (58) ein Polymer-Sorptionsmittel ist.

5. Klimaanlage (10) nach einem der Ansprüche 2 bis 4, wobei der Strömungskanal (R1, R2) ein Labyrinth aufweist, das die Außenluft (Aout) passieren lässt.

## Revendications

1. Climatiseur (10) comprenant une unité intérieure (20) et une unité extérieure (30), le climatiseur (10) comprenant :
un conduit de ventilation (56) qui relie un intérieur de l'unité extérieure (30) et un intérieur de l'unité intérieure (20) ; et
un ventilateur (66) qui aspire de l'air extérieur (Aout) dans l'unité extérieure (30) et qui envoie l'air extérieur (Aout) aspiré vers l'unité intérieure (20) à travers le conduit de ventilation (56),
le conduit de ventilation (56) comprenant un tuyau fixe (92), un tuyau de ventilation et un raccord (94),
le tuyau fixe (92) étant fixé à l'unité extérieure (30),
une extrémité distale (92a) du tuyau fixe (92) étant située à la position la plus basse dans le conduit de ventilation (56),
un trou traversant (92b) étant formé dans une partie la plus basse de l'extrémité distale (92a) du tuyau fixe (92) du conduit de ventilation (56) et
le conduit de ventilation (56) comprenant un capot (92c) qui s'étend depuis un côté plus proche de l'unité extérieure (30) et qui recouvre le trou traversant (92b), le capot (92c) étant conçu de telle sorte qu'un canal d'écoulement pour l'eau accumulée dans le conduit de ventilation (56) entrant dans le capot (92c) et atteignant le trou traversant (92b) est fourni de telle sorte qu'un sens dans lequel l'eau s'écoule est opposé à un sens de l'air extérieur (Aout).

2. Climatiseur (10) selon la revendication 1, comprenant :
un absorbant (58) qui est conçu pour absorber l'humidité de l'air extérieur ;
un canal d'écoulement (R1, R2) qui traverse l'absorbant (58) pour se raccorder au conduit de ventilation (56) ; et
un dispositif de chauffage (76A, 76B) qui est conçu pour chauffer l'air extérieur sur un côté en amont par rapport à l'absorbant (58) dans le canal d'écoulement (R1, R2),
le climatiseur (10) étant conçu pour effectuer une opération d'humidification,
le ventilateur (66) engendrant un écoulement de l'air extérieur (Aout) vers l'unité intérieure (20) dans le canal d'écoulement (R1, R2),
le dispositif de chauffage (76A, 76B) chauffant l'air extérieur (Aout), et l'air extérieur chauffé prenant l'humidité de l'absorbant (58) et s'écoulant vers l'unité intérieure (20).

3. Climatiseur (10) selon la revendication 2, le dispositif de chauffage (76A, 76B) étant un dispositif de chauffage à coefficient de température positif (PTC).

4. Climatiseur (10) selon la revendication 2 ou 3, l'absorbant (58) étant un sorbant polymère.

5. Climatiseur (10) selon l'une quelconque des revendications 2 à 4, le canal d'écoulement (R1, R2) comprenant un labyrinthe qui permet le passage de l'air extérieur (Aout).
